# DEMANDE DE BREVET EUROPEEN

(11) **EP 1 764 892 A1**
(43) Date de publication de la demande: **21.03.2007**
(21) Numéro de dépôt: 06120643.9
(22) Date de dépôt: 14.09.2006
(51) Int. Cl.: H02H 3/087

(54) **Dispositif pour surveiller l'apparition d'un courant de défaut à la sortie d'une source d'énergie d'un véhicule**

(30) Priorité: 14.09.2005 FR 0509374
(71) Demandeur: Electricfil Automotive, 01708 Miribel Cedex (FR)
(72) Inventeur: Legrand, Bertrand, 38000 Grenoble (FR)
(74) Mandataire: Thibault, Jean-Marc

(57) **Abrégé**

L'invention concerne un dispositif pour surveiller l'apparition d'un courant de défaut à la sortie d'une source d'énergie (**2**) d'un véhicule. Selon l'invention, le dispositif comporte :
- une branche de mesure de courant (**5**) montée en parallèle d'une branche de dérivation (**7**) présentant une résistance électrique inférieure de celle de la branche de mesure,
- des moyens (**9**) de mesure du courant circulant dans la branche de mesure (**5**),
- au moins un interrupteur commandé (**11**) placé dans la branche de dérivation (**7**),
- et des moyens d'analyse et de commande (**13**) reliés à l'interrupteur commandé (**11**), aux moyens de mesure (**9**) et à des moyens d'information (**15**) sur l'état de l'énergie fournie par la source d'énergie.

## Description

L'objet de l'invention concerne un dispositif pour détecter l'apparition d'un courant de défaut à la sortie d'une source d'énergie d'un véhicule automobile.

L'objet de l'invention trouve une application particulièrement avantageuse dans le domaine de la surveillance d'une batterie d'un véhicule automobile afin d'éviter sa décharge.

D'une manière générale, un véhicule automobile est équipé d'au moins une batterie qui même lorsque le véhicule est à l'arrêt, alimente certains équipements électriques et/ou électroniques selon une durée déterminée. C'est ainsi le cas des dispositifs anti-vols, des systèmes de verrouillage des portes, des feux de sécurité, etc.. Dans le même sens, certains équipements tels que des calculateurs, des circuits électroniques ou des actionneurs demandent régulièrement la fourniture d'une énergie électrique afin d'assurer différentes fonctions associées.

Des pannes ou des courts-circuits intervenant sur certains équipements électriques ou électroniques peuvent conduire à une décharge complète de la batterie. Il apparaît ainsi des courts-circuits de type résistif avec un courant qui ne dépasse pas quelques dizaines d'ampères, ne permettant pas de faire jouer les fusibles de protection pouvant entraîner une décharge de batterie, voire un incendie du véhicule. D'une manière générale, il apparaît le besoin de mesurer précisément un courant de défaut provenant d'un court-circuit ou d'un courant de fuite. L'état de la technique a proposé différentes solutions afin de détecter l'apparition d'un courant de défaut.

De manière générale, un dispositif de surveillance comporte un circuit de mesure de courant avec une résistance interposée entre la sortie de la batterie et les charges alimentées par la batterie. Un tel dispositif comporte également une unité de gestion qui en fonction de la mesure du courant pilote l'ouverture d'un interrupteur monté à la sortie de la batterie pour déconnecter des charges en cas d'apparition d'un courant de défaut.

Il doit être considéré que la résistance de mesure traversée par le courant est génératrice d'une chute de tension, ce qui diminue d'autant la tension appliquée aux charges alimentées. En effet, le courant traversant cette résistance lors des phases de marche du véhicule est important (quelques centaines d'ampères) ainsi que lors des demandes en courant par les calculateurs ou actionneurs pendant les phases d'arrêt du véhicule (quelques dizaines d'ampères). Par ailleurs, pour obtenir une mesure précise du courant de manière à optimiser la qualité de détection des défauts, il apparaît nécessaire de réaliser une mesure sur une faible gamme de valeurs, par exemple de l'ordre de plus ou moins 1 ampère. Aussi, pour avoir une mesure précise de courant sur une gamme de faible valeur, il apparaît nécessaire que la résistance de mesure traversée par le courant présente une grande valeur ohmique, ce qui entraîne une chute de tension élevée à fort courant. Il existe donc une incompatibilité entre d'une part, une mesure résistive précise sur une faible gamme de valeurs et d'autre part, une faible chute de tension alors que le courant délivré par la batterie et traversant la résistance présente une valeur importante.

L'objet de l'invention vise donc à proposer un dispositif permettant de pouvoir mesurer de manière précise, via une résistance ohmique, un courant de défaut tel qu'un court-circuit ou un courant de fuite, sans toutefois entraîner une chute de tension élevée par rapport aux charges alimentées par la batterie.

Pour atteindre un tel objectif, le dispositif pour surveiller l'apparition d'un courant de défaut à la sortie d'au moins une source d'énergie d'un véhicule, alimentant une série de charges électriques, est destiné à être monté à la sortie de la source d'énergie qui présente d'une part, un mode de fonctionnement fort courant correspondant à une fourniture en courant des charges électriques et d'autre part, un mode de fonctionnement hors fort courant.

Selon l'invention, le dispositif comporte :
- une branche de mesure de courant montée en parallèle d'une branche de dérivation présentant une résistance électrique inférieure de celle de la branche de mesure,
- des moyens de mesure du courant circulant dans la branche de mesure,
- au moins un interrupteur commandé placé dans la branche de dérivation,
- et des moyens d'analyse et de commande reliés à l'interrupteur commandé, aux moyens de mesure et à des moyens d'information sur l'état de l'énergie fourni par la source d'énergie, ces moyens d'analyse et de commande permettant d'une part, de fermer l'interrupteur lorsque la source d'énergie fonctionne en mode fort courant, et d'autre part, lorsque la source d'énergie est en mode hors fort courant, d'ouvrir l'interrupteur et de mesurer de manière précise le courant afin de détecter l'apparition d'un courant de défaut.

Selon une variante préférée de réalisation, les moyens d'analyse et de commande pilotent l'ouverture de moyens de coupure lors de la détection de l'apparition d'un courant de défaut.

Avantageusement, les moyens de coupure sont constitués par au moins un interrupteur monté en série dans la branche de mesure.

Selon un autre mode de réalisation, les moyens de coupure sont constitués par un interrupteur placé à la sortie de la source d'énergie ou en série avec au moins une charge électrique.

Selon un exemple de mise en oeuvre de l'invention, les moyens d'analyse et de commande pilotent l'ouverture de l'interrupteur monté en série dans la branche de mesure lorsque la source d'énergie est en mode fort courant.

Selon un exemple de réalisation, les moyens de mesure de courant comporte une résistance et un circuit de mesure du courant traversant la résistance.

Selon un autre mode de réalisation, les moyens de courant assurent une mesure du courant circulant dans la branche de mesure lorsque l'interrupteur est fermé.

Selon un exemple de mise en oeuvre de l'invention, les moyens d'analyse et de commande assurent l'ouverture des moyens de coupure et de l'interrupteur placé dans la branche de dérivation en fonction de l'état d'arrêt du véhicule.

De même, les moyens d'analyse et de commande pilotent la fermeture des moyens de coupure pour permettre une mesure de courant dans la branche de mesure.

Par exemple, les moyens d'analyse et de commande font partie intégrante du dispositif ou sont tout ou partie déportés dans un calculateur.

Un autre objet de l'invention est de proposer un système de surveillance de l'état électrique d'un véhicule comportant un dispositif conforme à l'invention.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique d'un premier exemple de réalisation d'un dispositif de surveillance conforme à l'invention.
La **Figure 2** est un schéma synoptique permettant de décrire le fonctionnement du dispositif de surveillance conforme à l'invention.
La **Figure 3** est un schéma illustrant une variante de réalisation du dispositif de surveillance conforme à l'invention.

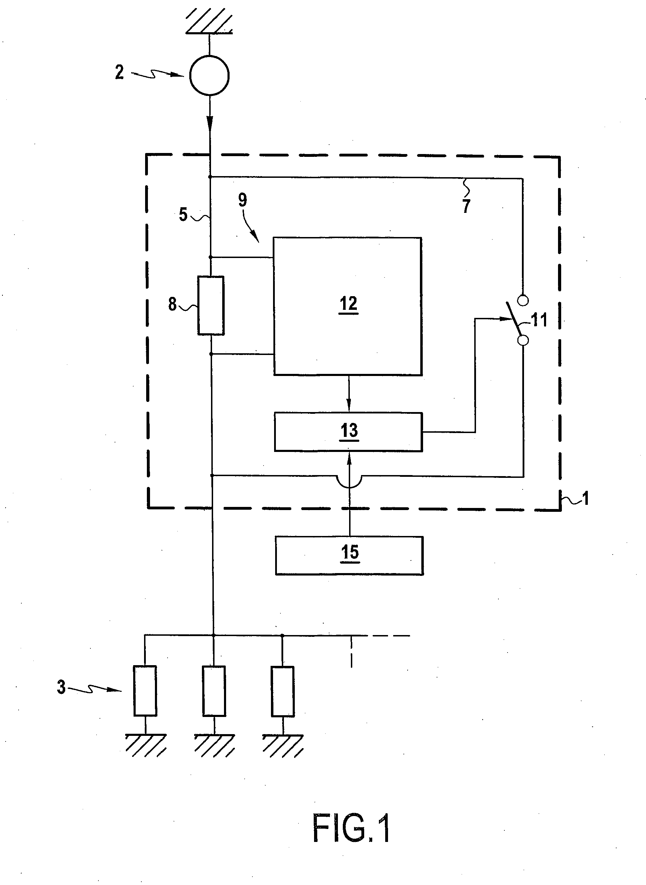

Tel que cela ressort de la **Fig. 1,** l'objet de l'invention concerne un dispositif **1** adapté pour surveiller l'apparition d'un courant de défaut à la sortie d'au moins une source d'énergie **2** d'un véhicule automobile. De manière classique, la source d'énergie **2** alimente une série de charges électriques **3** et se trouve composée d'une batterie montée en parallèle d'un alternateur.

Le dispositif de surveillance **1** est destiné à être monté à la sortie de la source d'énergie **2.** Par exemple, le dispositif **1** se présente sous la forme d'un boîtier interposé entre la source d'énergie **2** et les charges électriques **3.** Le dispositif de surveillance **1** comporte une branche **5** de mesure de courant montée en parallèle d'une branche de dérivation **7** qui présente une résistance électrique inférieure à la résistance électrique de la branche de mesure **5.** La branche de mesure **5** est équipée d'une résistance **8** dite shunt faisant partie de moyens de mesure de courant **9.**

La branche de dérivation **7** comporte au moins un interrupteur commandé **11** permettant d'ouvrir ou de fermer la branche de dérivation **7.** Il doit être considéré que la branche de dérivation **7** est faiblement résistive de sorte que la résistance est par exemple inférieure à 10 mΩ et de préférence comprise entre 1 et 10 mΩ. La branche de mesure **5** est fortement résistive de sorte que la résistance est par exemple supérieure à 100 mΩ et typiquement de l'ordre de quelques centaines mΩ, et de préférence comprise entre 100 mΩ et 10 Ω.

La résistance de la branche de dérivation **7** et la résistance de la branche de mesure **5** sont connues et déterminées à des valeurs indiquées ci-dessus.

Les moyens de mesure **9** comporte également un circuit de mesure **12** du courant traversant la branche de mesure **5** et plus précisément la résistance **8.** Ce circuit de mesure **12** peut être réalisé de toute manière appropriée en mettant par exemple en oeuvre un amplificateur placé aux bornes de la résistance **8.**

Le dispositif de surveillance **1** comporte également des moyens d'analyse et de commande **13** reliés à l'interrupteur commandé **11** et au circuit de mesure **12.** Ces moyens d'analyse et de commande **13** sont reliés également à des moyens d'information **15** donnant des renseignements sur l'état de l'énergie fourni par la source d'énergie **2.** D'une manière générale, il doit être considéré que la source d'énergie **2** présente un mode de fonctionnement à fort courant et un mode de fonctionnement hors fort courant. Le mode de fonctionnement à fort courant apparaît lorsque le véhicule est en marche (quelques centaines d'ampères) ou lorsque le véhicule est à l'arrêt mais que certaines charges telles que des actionneurs ou des calculateurs nécessitent un courant pendant une durée déterminée (quelques dizaines d'ampères). La source d'énergie **2** présente également un mode de fonctionnement hors fort courant pouvant être qualifié de mode de fonctionnement en faible courant. Les moyens d'informations **15** fournissent aux moyens d'analyse et de commande **13** des informations sur l'état de fonctionnement de la source d'énergie (mode fort courant ou mode hors courant) qui dépend des demandes en énergie des différentes charges **3.**

Les moyens d'analyse et de commande **13** permettent ainsi d'une part de fermer l'interrupteur **11** lorsque la batterie fonctionne en mode fort courant et d'autre part lorsque la batterie est en mode hors fort courant, d'ouvrir l'interrupteur **11** et de mesurer le courant circulant dans la branche de mesure **5** afin de détecter l'apparition d'un courant de défaut.

Ainsi, lorsqu'au moins une charge conduit à un mode de fonctionnement de la batterie en mode fort courant, la branche de dérivation **7** est fermée de sorte qu'il apparaît une très faible résistance et donc une très faible chute de tension alors même que le courant circulant peut être de valeur importante. Typiquement, il peut être prévu une résistance de quelques mΩ pour la branche de dérivation **7** de sorte qu'il apparaît une faible chute de tension inférieure au Volt. La dérivation est d'autant meilleure que la résistance de la branche de dérivation **7** est très inférieure à la résistance de la branche de mesure **5.** Il est à noter que pendant le mode de fonctionnement fort courant, les moyens de mesure **9** peuvent assurer une mesure du courant circulant dans la branche de mesure **5.** Cette mesure du courant circulant dans la branche de mesure **5** permet de connaître le courant total fourni par la batterie dans la mesure où est connu le rapport des résistances entre la branche de dérivation **7** et la branche de mesure **5.**

Lorsque la source d'énergie **2** est en mode de fonctionnement hors fort courant, la branche de dérivation **7** est ouverte par l'ouverture de l'interrupteur **11,** de sorte que le courant passe uniquement dans la branche de mesure **5.** Compte tenu de la grande valeur ohmique de la résistance **8,** il peut être obtenu une mesure précise de courant avec une faible chute de tension inférieure au Volt sur une gamme de valeurs de courant de faibles valeurs. Les moyens d'analyse et de commande **13** permettent ainsi de détecter l'apparition d'un courant de défaut aux bornes de la source d'énergie **2.**

Le dispositif de surveillance **1** selon l'invention permet ainsi de réaliser une mesure précise de courant tout en n'entraînant pas une chute de tension de la source d'énergie. Il est à noter que cette mesure de courant est efficace principalement lorsque débite en tant que source d'énergie **2,** la batterie.

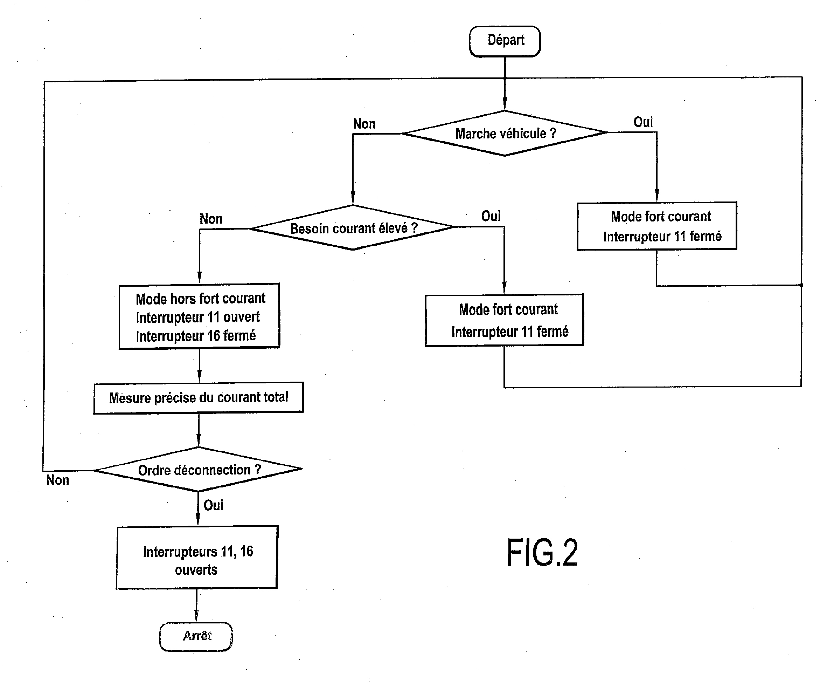

La **Fig. 2** permet d'expliciter le fonctionnement du dispositif de surveillance selon l'invention.

Il doit être noté que le dispositif de surveillance **1** prend en compte comme information la marche du véhicule. Si le véhicule est en marche, les moyens d'analyse et de commande **13** pilotent la fermeture de l'interrupteur commandé **11** afin que la source d'énergie puisse débiter dans les charges **3** via la branche de dérivation **7.** Si le véhicule est à l'arrêt, le dispositif de surveillance **1** prend en compte s'il apparaît ou non un besoin en courant élevé auprès d'au moins une charge. Si le besoin d'un courant élevé apparaît, les moyens d'analyse et de commande **13** pilotent la fermeture de l'interrupteur commandé **11** afin d'assurer l'alimentation des charges **3,** via la branche de dérivation **7.**

Lorsqu'aucun besoin en courant élevé n'apparaît alors que le véhicule est à l'arrêt, les moyens d'analyse et de commande **13** pilotent l'ouverture de l'interrupteur **11** de la branche de dérivation **7** et la fermeture de l'interrupteur **16** de la branche de mesure **5.** Les moyens **12** mesurent le courant circulant dans la branche de mesure **5** afin d'apprécier si le courant circulant correspond ou non à un courant de défaut.

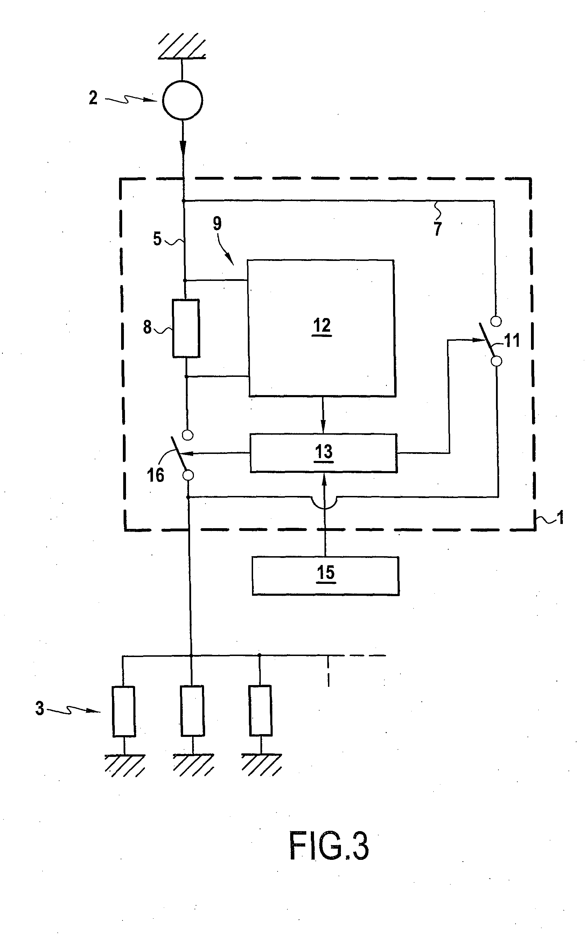

La **Fig. 3** illustre un exemple préféré de réalisation dans lequel les moyens d'analyse et de commande **13** pilotent l'ouverture de moyens de coupure **16** lors de la détection de l'apparition d'un courant de défaut. Tel que cela ressort plus précisément de l'exemple illustré à la **Fig. 3,** les moyens de coupure **16** sont constitués par au moins un interrupteur monté en série dans la branche de mesure **5.**

Lorsque les moyens d'analyse et de commande **13** détectent l'apparition d'un courant de défaut, les moyens d'analyse et de commande **13** pilotent l'ouverture de l'interrupteur **16** afin de déconnecter les charges **3** de la source d'énergie. Lorsque les deux interrupteurs **11** et **16** sont en position ouverte, la source d'énergie **2** est isolée et protégée d'une décharge intempestive.

Tel que cela ressort plus précisément de la **Fig. 2,** les moyens d'analyse et de commande **13** prennent aussi en compte selon la variante de réalisation illustrée à la **Fig. 3,** un ordre de déconnexion si la valeur du courant mesuré dépasse une valeur déterminée ou ne correspond pas à une demande particulière d'une charge. Dans ce cas, l'interrupteur **16** est ouvert. Il est à noter que les moyens d'analyse et de commande **13** peuvent piloter l'ouverture de l'interrupteur **16** en fonction de l'état d'arrêt du véhicule. Ainsi, l'interrupteur **16** peut être ouvert suite à une volonté de déconnexion de la source d'énergie par exemple avant la commercialisation du véhicule ou suite à un arrêt prolongé du véhicule pendant une durée déterminée.

Dans le cas où l'ordre de déconnexion n'est pas donné, le dispositif de surveillance reste dans cet état tant qu'une information différente n'apparaît pas au niveau de la marche du véhicule ou d'un besoin en courant.

Dans l'exemple de réalisation illustré à la **Fig. 3,** l'interrupteur **16** est placé de façon préférée dans la branche de mesure **5.** Bien entendu, l'interrupteur **16** peut être placé directement à la sortie de la source d'énergie ou en série avec une ou plusieurs charges électriques **3.**

Par ailleurs, il est à noter que les moyens d'analyse et de commande **13** peuvent piloter l'ouverture de l'interrupteur **16** placé dans la branche de mesure **5** lorsque la source d'énergie est en mode fort courant, c'est-à-dire lorsque l'interrupteur **11** est fermé. Bien entendu, l'interrupteur **16** est fermé par les moyens d'analyse et de commande **13** lorsqu'une mesure de courant est effectuée, en mode hors fort courant voire en mode fort courant.

Dans les exemples illustrés, les moyens d'analyse et de commande **13** sont considérés comme faisant partie intégrante du dispositif **1.** Bien entendu, il peut être envisagé que ces moyens d'analyse et de commande **13** soient tout ou partie déportés à l'extérieur du dispositif **1.** Ainsi, une partie ou la totalité des moyens d'analyse et de commande **13** peuvent être déportés dans un calculateur associé au véhicule.

Par ailleurs, il doit être considéré que le dispositif de surveillance **1** selon l'invention peut faire partie d'un système pour surveiller l'état électrique du véhicule. Ainsi, le dispositif **1** peut être intégré à un système visant à surveiller ou protéger la batterie contre une décharge ou à protéger un véhicule contre l'incendie.

L'invention n'est pas limitée aux exemples décrits et représentés car diverses modifications peuvent y être apportées sans sortir de son cadre.

## Revendications

1. - Dispositif pour surveiller l'apparition d'un courant de défaut à la sortie d'au moins une source d'énergie (**2**) d'un véhicule, alimentant une série de charges électriques (**3**), le dispositif étant destiné à être monté à la sortie de la source d'énergie qui présente d'une part, un mode de fonctionnement fort courant correspondant à une fourniture en courant des charges électriques et d'autre part, un mode de fonctionnement hors fort courant, **caractérisé en ce qu'**il comporte :
- une branche de mesure de courant (**5**) montée en parallèle d'une branche de dérivation (**7**) présentant une résistance électrique inférieure de celle de la branche de mesure,
- des moyens (9) de mesure du courant circulant dans la branche de mesure (**5**),
- au moins un interrupteur commandé (**11**) placé dans la branche de dérivation (**7**),
- et des moyens d'analyse et de commande (**13**) reliés à l'interrupteur commandé (**11**), aux moyens de mesure (**9**) et à des moyens d'information (**15**) sur l'état de l'énergie fourni par la source d'énergie (**2**), ces moyens d'analyse et de commande (**13**) permettant d'une part, de fermer l'interrupteur (**11**) lorsque la source d'énergie fonctionne en mode fort courant, et d'autre part, lorsque la source d'énergie est en mode hors fort courant, d'ouvrir l'interrupteur (**11**) et de mesurer de manière précise le courant afin de détecter l'apparition d'un courant de défaut.

2. - Dispositif selon la revendication 1, **caractérisé en ce que** les moyens d'analyse et de commande (**13**) pilotent l'ouverture de moyens de coupure (**16**) lors de la détection de l'apparition d'un courant de défaut.

3. - Dispositif selon la revendication 2, **caractérisé en ce que** les moyens de coupure (**16**) sont constitués par au moins un interrupteur monté en série dans la branche de mesure (**5**).

4. - Dispositif selon la revendication 2, **caractérisé en ce que** les moyens de coupure (**16**) sont constitués par un interrupteur placé à la sortie de la source d'énergie ou en série avec au moins une charge électrique.

5. - Dispositif selon les revendications 1 et 3, **caractérisé en ce que** les moyens d'analyse et de commande (**13**) pilotent l'ouverture de l'interrupteur (**16**) monté en série dans la branche de mesure lorsque la source d'énergie est en mode fort courant.

6. - Dispositif selon la revendication 1, **caractérisé en ce que** les moyens de mesure de courant (**9**) comporte une résistance (**8**) et un circuit de mesure (**12**) du courant traversant la résistance (**8**).

7. - Dispositif selon la revendication 1, **caractérisé en ce que** les moyens de courant (**9**) assurent une mesure du courant circulant dans la branche de mesure (**5**) lorsque l'interrupteur (**11**) est fermé.

8. - Dispositif selon la revendication 2, **caractérisé en ce que** les moyens d'analyse et de commande (**13**) assurent l'ouverture des moyens de coupure (**16**) et de l'interrupteur (**11**) placé dans la branche de dérivation en fonction de l'état d'arrêt du véhicule.

9. - Dispositif selon la revendication 2, **caractérisé en ce que** les moyens d'analyse et de commande (**13**) pilotent la fermeture des moyens de coupure (**16**) pour permettre une mesure de courant dans la branche de mesure (**5**).

10. - Dispositif selon la revendication 1, **caractérisé en ce que** les moyens d'analyse et de commande (**13**) font partie intégrante du dispositif ou sont tout ou partie déportés dans un calculateur.

11. **-** Dispositif selon la revendication 1, **caractérisé en ce que** la branche de dérivation (**7**) présente une résistance comprise entre 1 et 10 mΩ et la branche de mesure (**5**) présente une résistance comprise entre 100 mΩ et 10 Ω.

12. - Système de surveillance de l'état électrique d'un véhicule **caractérisé en ce qu'**il comporte un dispositif (**1**) conforme à l'une des revendications 1 à 11.
